# EUROPÄISCHE PATENTSCHRIFT

(11) **EP 1 201 475 B1**
(45) Veröffentlichungstag und Bekanntmachung des Hinweises auf die Patenterteilung: **11.04.2007**
(21) Anmeldenummer: 01124855.6
(22) Anmeldetag: 18.10.2001
(51) Int. Cl.: B60J 7/22

(54) **Windstopeinrichtung**
Wind stop device
Dispositif pare-vent

(30) Priorität: 24.10.2000 DE 10053701
(43) Veröffentlichungstag der Anmeldung: 02.05.2002
(73) Patentinhaber: SCAMBIA INDUSTRIAL DEVELOPMENTS AKTIENGESELLSCHAFT, 9494 Schaan (LI)
(72) Erfinder: Mäurle, Hermann, 70619 Stuttgart (DE); Riehle, Jörg, 70439 Stuttgart (DE)
(74) Vertreter: Hoeger, Stellrecht & Partner Patentanwälte

(56) Entgegenhaltungen:
- EP-A- 0 887 217
- EP-A- 1 010 561
- WO-A-97/04976
- DE-A- 19 616 448
- DE-A- 19 728 453

## Beschreibung

Die Erfindung betrifft eine Windstopeinrichtung mit den Merkmalen des Oberbegriffs von Anspruch 1.

Derartige Windstopeinrichtungen sind beispielsweise aus der DE 195 45 405 bekannt. Derartige Windstopeinrichtungen sind aber auch aus der DE 196 16 448 A bekannt.

Bei beiden bekannten Lösungen sind zwar die zwei Windschottteile um die Windschottklappachse klappbar, so daß sie im zusammengeklappten Zustand im wesentlichen aufeinander liegen. Allerdings liegen die Abdeckteile auf gegenüberliegenden Seiten des aus den Windschottteilen gebildeten Stapels. Bei diesen Windstopeinrichtungen besteht das Problem, daß diese beim Zusammenklappen unhandlich sind.

Der Erfindung liegt daher die Aufgabe zugrunde, eine Windstopeinrichtung der gattungsgemäßen Art derart zu verbessern, daß diese sich handlicher zusammenklappen läßt.

Diese Aufgabe wird mit den Merkmalen des Anspruchs 1 gelöst.

Der Vorteil dieser Lösung ist darin zu sehen, daß sowohl das Windschott als auch die Abdeckung jeweils für sich um die eigene Klappachse zusammenklappbar sind und das zusammengeklappte Windschott und die zusammengeklappte Abdeckung lediglich über die bewegliche Verbindung eines der Windschotteile mit dem entsprechenden an dieses angrenzenden der Abdeckteile aneinander gehalten sind.

Besonders günstig ist es, wenn die Verbindung so ausgebildet ist, daß das eine der Windschotteile und das eine der Abdeckungsteile von der Funktionsstellung, in welcher diese quer zueinander verlaufen, in eine zusammengeklappte Stellung, in welcher diese im wesentlichen aufeinanderliegen, bewegbar sind.

Eine besonders günstige Lösung sieht dabei vor, daß die bewegliche Verbindung eine um eine Verbindungsklappachse schwenkbare Verbindung, beispielsweise ein Scharnier, ist.

Hinsichtlich der Verbindung des anderen der Windschotteile und des anderen der Abdeckungsteile in der Funktionsstellung wurden bislang keine näheren Angaben gemacht.

Prinzipiell wäre es denkbar, gar keine Verbindung zwischen diesen vorzusehen, sondern diese jeweils an der Karosserie zu fixieren, wenn sie in der Funktionsstellung stehen, das heißt, wenn die Windschotteile und die Abdeckungsteile in der ausgebreiteten Stellung quer zueinander ausgerichtet stehen. Besonders günstig ist es jedoch, wenn das andere der Windschotteile und das andere der Abdeckungsteile in der Funktionsstellung lösbar miteinander verbindbar sind.

Besonders günstig ist es dabei, wenn das andere der Windschotteile und das andere der Abdeckungsteile durch eine bewegliche Verbindung miteinander lösbar verbindbar sind.

Eine besonders günstige Lösung sieht dabei vor, daß das andere der Windschotteile und das andere der Abdeckungsteile in der jeweils ausgebreiteten Stellung um eine zur Verbindungsklappachse koaxiale Achse schwenkbar miteinander verbindbar sind.

Mit dieser Lösung besteht insbesondere die Möglichkeit, das Windschott in der ausgebreiteten Stellung in Richtung der Abdeckung zu verschwenken und auf die Abdeckung aufzulegen, um die Windstopeinrichtung noch weiter zusammenzuklappen, beispielsweise dadurch, daß dann nachfolgend die lösbare Verbindung zwischen dem anderen der Windschotteile und dem anderen der Abdeckungsteile gelöst wird und das andere der Windschotteile auf das eine der Windschotteile geklappt wird.

Hinsichtlich der Ausbildung des Windschotts wurden im Zusammenhang mit der bisherigen Erläuterung der einzelnen Ausführungsbeispiele keine detaillierten Angaben gemacht. So wäre es beispielsweise denkbar, das Windschott, umfassend die beiden Windschotteile, durch zwei selbsttragende Teile zu bilden.

Eine besonders günstige Lösung sieht jedoch vor, daß das Windschott einen Windschottrahmen umfaßt, welcher eine Flachmaterialbahn hält, wobei auch die Flachmaterialbahn beispielsweise selbsttragend und steif ausgebildet sein kann.

Besonders günstig ist es jedoch, wenn der Windschottrahmen die Flachmaterialbahn aufgespannt hält, so daß in diesem Fall vorzugsweise eine biegeschlaffe Flachmaterialbahn zum Einsatz kommt, die sich bei bekannten Windstopeinrichtungen als besonders zweckmäßig erwiesen hat.

Eine erfindungsgemäß geeignete Flachmaterialbahn ist beispielsweise eine geringfügig luftdurchlässige, jedoch windabschirmende Flachmaterialbahn.

Um den Windschottrahmen bei von diesem aufgespannter Flachmaterial klappen zu können, ist vorzugsweise vorgesehen, daß die Windschottklappachse nahe einer Fläche liegt, in welcher sich die Flachmaterialbahn erstreckt.

Vorzugsweise liegt dabei die Windschottklappachse nahe einer Ebene, in welcher die Flachmaterialbahn bei in ausgebreiteter Stellung stehenden Windschotteilen angeordnet ist.

Hinsichtlich der Ausbildung des Windschottrahmens wurden bislang keine näheren Angaben gemacht. Vorzugsweise ist dabei der Windschottrahmen durch einen unteren und einen oberen Rahmenträger sowie diese verbindende Verbindungsträger gebildet.

Um insbesondere beim Windschott eine möglichst geringe optische Beeinträchtigung der Sicht nach hinten zu erreichen, ist vorzugsweise vorgesehen, daß der untere Rahmenträger und der obere Rahmenträger zwei jeweils durch ein Scharnier verbundene Rahmenträgerteile aufweisen, und daß im Bereich der Windschottklappachse keine Verbindungsträger zwischen dem oberen und dem unteren Rahmenträger vorgesehen sind, so daß der Windschottrahmen eine zusammenhängende Rahmenöffnung umschließt.

Vorzugsweise ist der Windschottrahmen aus zwei C-förmigen Teilrahmen gebildet, die sich mit ihren offenen Seiten an die Windschottklappachse anschließen.

Hinsichtlich der Ausbildung der Abdeckung sind die unterschiedlichsten Möglichkeiten denkbar. Beispielsweise könnte die Abdeckung aus zwei platten-ähnlichen selbsttragenden Teilen gebildet sein.

Eine besonders günstige Lösung sieht jedoch vor, daß die Abdeckung einen Abdeckungsrahmen umfaßt, welcher eine Flachmaterialbahn hält.

Vorzugsweise ist auch beim Abdeckungsrahmen die Flachmaterialbahn vom Abdeckungsrahmen aufgespannt gehalten.

Hinsichtlich der Anordnung der Abdeckungsklappachse wurden ebenfalls keine näheren Angaben gemacht. So sieht eine besonders vorteilhafte Lösung vor, daß die Abdeckungsklappachse nahe einer Fläche liegt, in welcher sich die Flachmaterialbahn erstreckt.

Besonders günstig ist es dabei, wenn die Abdeckungsklappachse nahe einer Ebene liegt, in welcher sich die Flachmaterialbahn bei in ausgebreiteter Stellung stehenden Abdeckungsteilen erstreckt.

Hinsichtlich der Ausbildung des Abdeckungsrahmens selbst wurden bislang ebenfalls keine näheren Angaben gemacht.

So ist es günstig, wenn der Abdeckungsrahmen zwei quer zur Abdeckungsklappachse verlaufende Rahmenträger aufweist, die durch Verbindungsträger miteinander verbunden sind.

Vorzugsweise ist einer der Rahmenträger ein vorderer Rahmenträger und der andere ein hinterer Rahmenträger.

Der Abdeckungsrahmen kann zur Bildung der Abdeckungsteile entweder so ausgebildet sein, daß er eine zusammenhängende Rahmenöffnung umschließt und insbesondere zwei C-förmige Rahmenteile aufweist, die mit ihren offenen Seiten an der Abdeckungsklappachse aneinander anschließen.

Es ist aber auch denkbar, den Abdeckungsrahmen aus zwei umlaufend geschlossenen Rahmenteilen zu bilden, so daß jede derselben eine Rahmenöffnung umschließt und diese Rahmenteile aneinander längs der Abdeckungsklappachse schwenkbar gelagert sind.

Hinsichtlich der lösbaren Verbindung des anderen der Windschotteile und des anderen der Abdeckungsteile ist vorzugsweise vorgesehen, daß diese gleichzeitig eine Fixiereinrichtung zur Fixierung der erfindungsgemäßen Windstopeinrichtung an der Karosserie des Cabriofahrzeugs darstellt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine ausschnittsweise Darstellung einer Karosserie eines Cabriofahrzeugs mit einem daran montierten ersten Ausführungsbeispiel einer erfindungsgemäßen Windstopeinrichtung in Funktionsstellung;
- Fig. 2: eine Darstellung des ersten Ausführungsbeispiels der erfindungsgemäßen Windstopeinrichtung betrachtet in Richtung des Pfeils A in Fig. 1;
- Fig. 3: eine Darstellung des ersten Ausführungsbeispiels der erfindungsgemäßen Windstopeinrichtung bei Klappung um eine Verbindungsklappachse;
- Fig. 4: eine schematische Darstellung weiterer Schritte zum Zusammenklappen der erfindungsgemäßen Windstopeinrichtung;
- Fig. 5: eine perspektivische Darstellung des ersten Ausführungsbeispiels der erfindungsgemäßen Windstopeinrichtung in zusammengeklappter Stellung;
- Fig. 6: eine teilweise aufgeklappte Darstellung des ersten Ausführungsbeispiels der erfindungsgemäßen Windstopeinrichtung mit Darstellung eines Ausführungsbeispiels einer lösbaren Verbindung für eines der Windschotteile und eines der Abdeckungsteile;
- Fig. 7: eine Darstellung ähnlich Fig. 2 eines zweiten Ausführungsbeispiels einer erfindungsgemäßen Windstopeinrichtung;
- Fig. 8: eine Darstellung ähnlich Fig. 3 des zweiten Ausführungsbeispiels der erfindungsgemäßen Windstopeinrichtung;
- Fig. 9: eine Darstellung ähnlich Fig. 4 des zweiten Ausführungsbeispiels der erfindungsgemäßen Windstopeinrichtung und
- Fig. 10: eine Darstellung ähnlich Fig. 5 des zweiten Ausführungsbeispiels der erfindungsgemäßen Windstopeinrichtung.

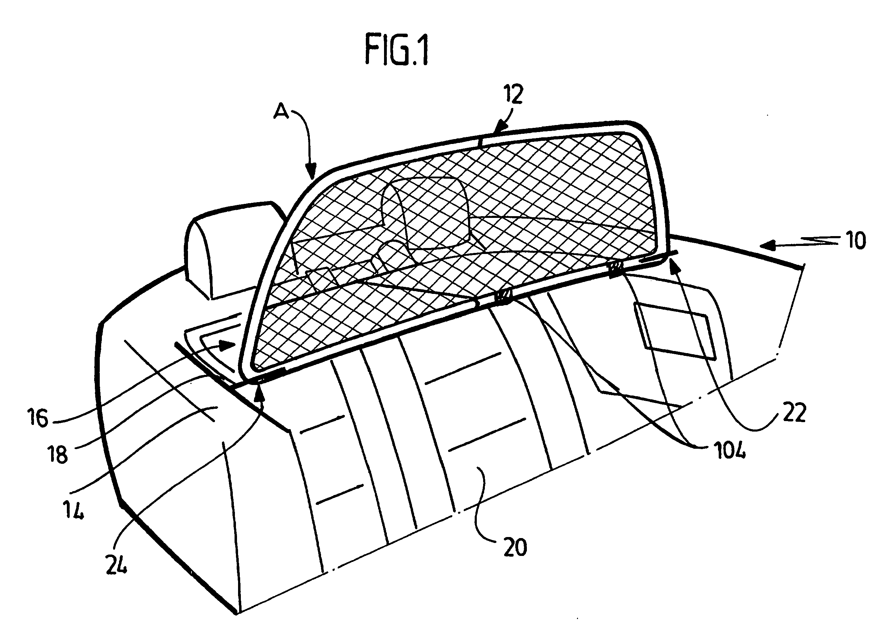

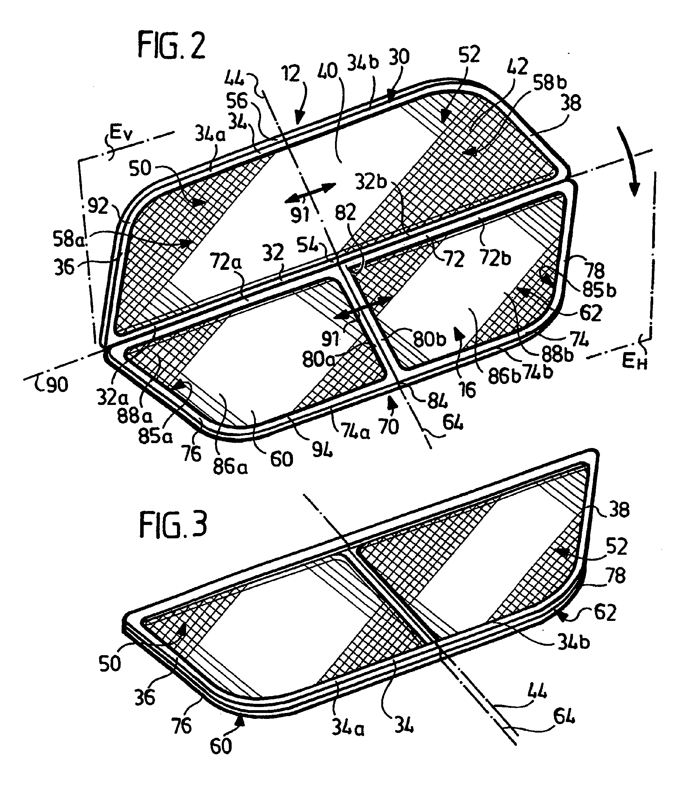

Ein erstes Ausführungsbeispiel einer erfindungsgemäßen Windstopeinrichtung für ein Kraftfahrzeug, dessen Karosserie 10 in Fig. 1 und 2 ausschnittsweise dargestellt ist, umfaßt ein Windschott 12, welches über eine Gürtellinie 14 der Karosserie 10 des Cabriofahrzeugs nach oben übersteht sowie eine Abdeckung 16, welche einen hinter dem Windschott 12 liegenden Teilbereich 18 einer in Höhe der Gürtellinie 14 liegenden Fahrgastraumöffnung abdeckt, beispielsweise ist dies ein über Rücksitzen 20 liegender Teilbereich 18, wobei das Windschott 12 im wesentlichen unmittelbar hinter Kopfstützen von nicht dargestellten Vordersitzen der Karosserie 10 angeordnet ist.

Die Abdeckung 16 ist mit dem Windschott 12 vorzugsweise gelenkig verbunden und beide sind über Fixiereinrichtungen 22, 24 mit der Karosserie 10 im Bereich der Gürtellinie 14 verbindbar, wobei die Fixiereinrichtungen 22, 24 entweder am Windschott 12 oder an der Abdeckung 16 angeordnet sind, wie nachfolgend im einzelnen noch erläutert ist.

Das Windschott 12 ist gebildet durch einen Windschottrahmen 30, welcher einen unteren Rahmenträger 32 und einen oberen Rahmenträger 34 aufweist und den unteren Rahmenträger 32 sowie den oberen Rahmenträger 34 miteinander verbindende äußere Verbindungsträger 36, 38, die jeweils äußere Endbereiche des unteren Rahmenträgers 32 und des oberen Rahmenträgers 34 miteinander verbinden, so daß der Rahmen 30 eine Rahmenöffnung 40 umschließt.

In der Rahmenöffnung 40 erstreckt sich eine Flachmaterialbahn 42, die an dem Windschottrahmen 30 gehalten ist und vorzugsweise durch den Windschottrahmen 30 gespannt gehalten wird, sofern es sich bei der Flachmaterialbahn 42 um eine biegeschlaffe Flachmaterialbahn handelt.

Zur Bildung zweier um eine Windschottklappachse 44 relativ zueinander schwenkbarer Windschotteile 50 und 52 des Windschotts 30 sind der untere Rahmenträger 32 und der obere Rahmenträger 34 ungefähr mittig mit jeweils einem Scharnier 54 bzw. 56 versehen, deren Scharnierachsen koaxial zur Windschottklappachse 44 angeordnet sind.

Somit umfassen der untere Rahmenträger 32 und der obere Rahmenträger 34 jeweils zwei durch die Scharniere 54 und 56 getrennte Rahmenträgerteile 32a, b bzw. 34a, b. Die Rahmenträgerteile 32a, 34a bilden mit dem Verbindungsträger 36 ein C-förmiges Windschottrahmenteil 58a, während die Rahmenträgerteile 32b und 34 b mit dem Verbindungsträger 38 ein C-förmiges Windschottrahmenteil 58b bilden und beide Windschottrahmenteile 58a, b mit ihren offenen Seiten an die Windschottklappachse 44 angrenzen.

Ferner umfaßt die Abdeckung 16 zwei Abdeckungsteile 60 und 62, die relativ zueinander um eine gemeinsame Abdeckungsklappachse 64 klappbar sind.

Vorzugsweise umfaßt auch die Abdeckung 16 einen Abdeckungsrahmen 70, welcher bei diesem Ausführungsbeispiel einen vorderen Rahmenträger 72 und einen hinteren Rahmenträger 74 umfaßt, die beide durch äußere Verbindungsträger 76 und 78 miteinander verbunden sind. Ferner sind noch innere beiderseits der Abdeckungsklappachse 64 verlaufende Verbindungsträger 80a und 80b vorgesehen, die ebenfalls den vorderen Rahmenträger 72 und den hinteren Rahmenträger 74 miteinander verbinden, wobei der vordere Rahmenträger 72 und der hintere Rahmenträger 74 längs der Abdeckungsklappachse 64 geteilt und ebenfalls vorzugsweise durch Scharniere 82 und 84 miteinander verbunden sind, welche mit ihren Scharnierachsen koaxial zur Abdeckungsklappachse 64 angeordnet sind.

Es ist aber auch möglich, die Scharniere 82 und 84 im Bereich der inneren Verbindungsträger 80a und 80b anzuordnen und somit die Verbindungsträger 80a und 80b relativ zueinander um die Abdeckungsklappachse 64 klappbar zu gestalten.

Somit bilden der innere Verbindungsträger 80a und der äußere Verbindungsträger 76 zusammen mit einem sich zwischen diesen erstreckenden vorderen Rahmenträgerteil 72a und dem sich zwischen diesen erstreckenden hinteren Rahmenträgerteil 74a einen Teilrahmen 85a und der innere Verbindungsträger 80b mit dem äußeren Verbindungsträger 78 und einem sich zwischen diesen erstreckenden vorderen Rahmenträgerteil 72b und einem hinteren Rahmenträgerteil 74b einen weiteren Teilrahmen 85b, wobei jeder Teilrahmen 85a und 85b eine Rahmenöffnung 86a, 86b umgibt, über welche sich eine Flachmaterialbahn 88a bzw. 88b erstreckt, wobei die Flachmaterialbahn vorzugsweise durch die Teilrahmen 85a bzw. 85b aufgespannt gehalten ist.

In der Funktionsstellung der Windstopeinrichtung sind die Windschotteile 50 und 52 in einer ausgebreiteten Stellung und haben in einer zur Verbindungsklappachse 90 parallelen Ausbreitungsrichtung 91 eine maximale Ausdehnung. Ferner sind auch die Abdeckungsteile 60 und 62 in einer ausgebreiteten Stellung und haben ebenfalls in der Ausbreitungsrichtung 91 eine maximale Ausdehnung.

Ferner ist das Windschott 12 mit seinem unteren Rahmenträger 32 mit dem vorderen Rahmenträger 72 der Abdeckung 16 verbunden, wobei diese Verbindung vorzugsweise eine um eine quer zu einer Fahrzeuglängsrichtung verlaufende Verbindungsklappachse 90 schwenkbare Verbindung ist, die, wie nachfolgend noch im einzelnen erläutert, in unterschiedlichster Art und Weise realisiert sein kann.

In ihrer in Fig. 1 und 2 dargestellten Funktionsstellung der Windstopeinrichtung sind die beiden in der ausgebreiteten Stellung stehenden Windschotteile 50 und 52 derart zueinander ausgerichtet, daß sie näherungsweise in einer Ebene E_{V} liegen, die näherungsweise vertikal verläuft, wobei der Begriff näherungsweise vertikal eine Winkelabweichung von plus/minus 30° zur exakt vertikalen Richtung mit umfaßt.

Die Ebene E_{V} steht dabei quer zu einer Ebene E_{H}, in welcher in der Funktionsstellung der Windstopeinrichtung die Abdeckungsteile 60 und 62 liegen, wobei die Ebene E_{H} ungefähr parallel zur Gürtellinie 14 der Karosserie 10 im Teilbereich 18 verläuft.

Zum Zusammenklappen der erfindungsgemäßen Windstopeinrichtung lassen sich nun das Windschott 12 und die Abdeckung 16 so um die Verbindungsklappachse 90 aufeinanderklappen, daß eine Rückseite 92 des Windschotts 12 auf einer Oberseite 94 der Abdeckung 16 liegt, wobei hierzu noch keine Klappung weder um die Windschottklappachse 44 noch um die Abdeckungsklappachse 64 erfolgt sein muß (Fig. 3).

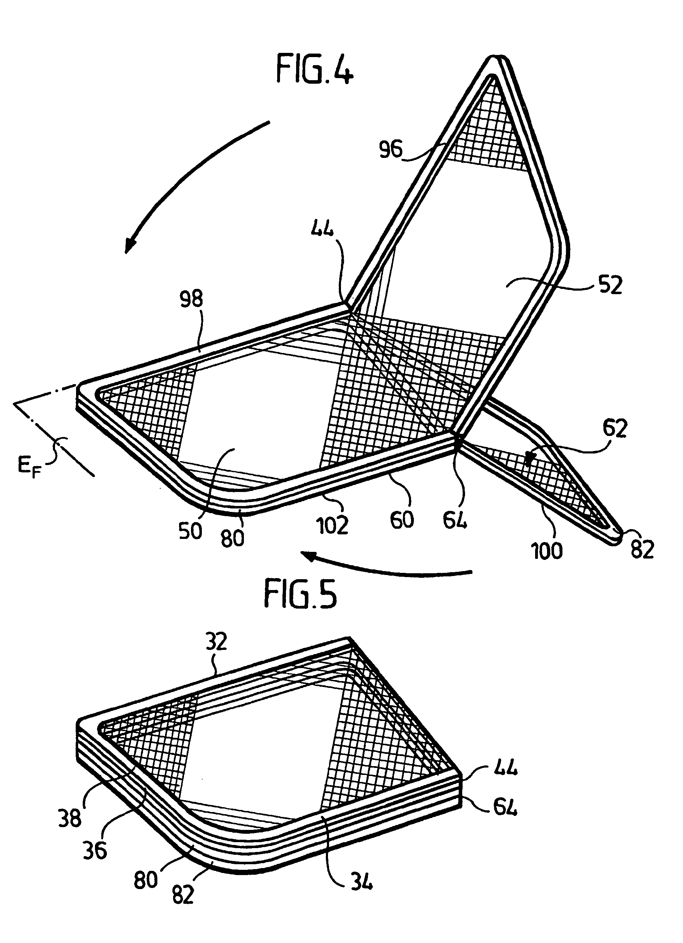

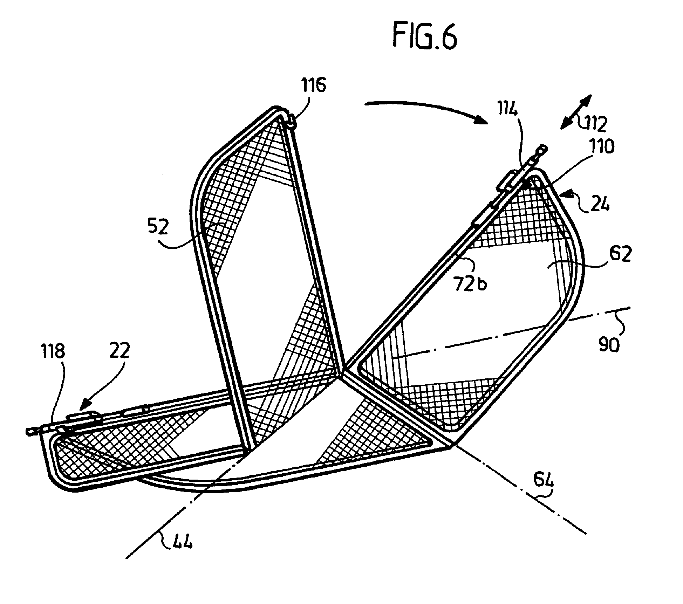

Außerdem besteht, wie in Fig. 4 dargestellt, die Möglichkeit, eines der Windschotteile 50 oder 52, beispielsweise das Windschotteil 52 so um die Windschottklappachse 44 zu klappen, daß eine Vorderseite 96 des Windschotteils 52 auf einer Vorderseite 98 des Windschotteils 50 liegt, wie in Fig. 5 dargestellt.

Um dieses Klappen möglichst einfach zu gestalten, liegt die Flachmaterialbahn 42 jeweils in einer im wesentlichen mit der jeweiligen Vorderseite 96, 98 der Windschotteile 50, 52 ungefähr zusammenfallenden Fläche, vorzugsweise einer Ebene E_{F}, und in einer Schnittlinie dieser Flächen E_{F} liegt vorzugsweise auch die Windschottklappachse 44.

Ferner besteht die Möglichkeit, noch die Abdeckungsteile 60 und 62 um die Abdeckungsklappachse 64 zu klappen, beispielsweise so, daß eine Unterseite 100 des Abdeckungsteils 62 auf einer Unterseite 102 des Abdeckungsteils 60 liegt.

Um das Klappen der Abdeckungsteile 60 und 62 möglichst einfach zu gestalten, liegt die Abdeckungsklappachse 64 in einer Schnittlinie der durch die Unterseiten 100 und 102 definierten Flächen.

Vorzugsweise sind die Windschottklappachse 44 und die Abdeckungsklappachse 64 so gelegt, daß bei um die Verbindungsklappachse 90 auf die Abdeckung 16 gelegtem Windschott 12 die Windschottklappachse 44 und die Abdeckungsklappachse 64 im wesentlichen übereinander liegen und mit Abstand parallel zueinander verlaufen, so daß bei aufeinandergeklappten Windschotteilen 52 und 50, wie in Fig. 5 dargestellt, die Rahmenträgerteile 32a, b und 34a, b sowie die äußeren Verbindungsträger 36 und 38 ebenfalls aufeinanderliegen.

Ferner ist die Abdeckung 16 ebenfalls so ausgebildet, daß die Teilrahmen 85a und 85b ebenfalls im wesentlichen deckungsgleich aufeinander liegen.

Vorzugsweise sind die Windschotteile 50 und 52 sowie die Abdeckungsteile 60 und 62 im wesentlichen ungefähr gleich groß und gleich geformt, so daß sich im vollständig zusammengeklappten Zustand der erfindungsgemäßen Windstopeinrichtung ein Stapel bilden läßt, bei welchem zunächst zwei Abdeckungsteile, nämlich die Abdeckungsteile 60 und 62 aufeinander liegen und auf diesen zwei übereinanderliegende Windschotteile 50 und 52 liegen.

Zum Aufeinanderlegen der Windschotteile 52 und 50 sowie der Abdeckungsteile 60 und 62 ist vorzugsweise eine zumindest lösbare Verbindung zwischen dem Windschotteil 52 und dem Abdeckungsteil 62 vorgesehen, mit welcher eine Festlegung des sich im Windschotteil 52 erstreckenden unteren Rahmenträgerteils 32b an dem im Abdeckungsteil 62 sich erstreckenden vorderen Rahmenträgerteil 72b lösbar möglich ist.

Im Gegensatz dazu ist vorzugsweise das Windschotteil 50 mit dem Abdeckungsteil 60 über ein Scharnier 104 fest verbunden, dessen Scharnierachse mit der Verbindungsklappachse 90 zusammenfällt.

Vorzugsweise erfolgt die lösbare Verbindung zwischen dem Windschotteil 52 und dem Abdeckungsteil 62 über eine Verriegelungseinheit 110, die einen in einer Richtung 112 parallel zum vorderen Rahmenträgerteil 72b verschiebbaren Verriegelungsbolzen 114 aufweist, der Teil der Fixiereinrichtung 24 ist und zur Fixierung der Windstopeinrichtung an der Karosserie 10 dient (Fig. 6). Gleichzeitig ist jedoch der Verriegelungsbolzen 114 noch so in Richtung der Abdeckungsklappachse 64 verschiebbar, daß der Verriegelungsbolzen 114 mit einer am Rahmenträgerteil 32b gehaltenen Öse 116 in Eingriff oder außer Eingriff bringbar ist, durch welche sich der Verriegelungsbolzen 114 im verbundenen Zustand des Windschotteils 52 mit dem Abdeckungsteil 62 hindurcherstreckt, so daß die Öse 116 und der Verriegelungsbolzen 114 ein Scharnier zwischen dem Windschotteil 52 und dem Abdeckungsteil 62 bilden, dessen Scharnierachse koaxial zur Verbindungsklappachse 90 liegt.

Ein derartiges Scharnier läßt sich aus der Öse 116 und dem Verriegelungsbolzen 114 jedoch nur dann bilden, wenn der Verriegelungsbolzen 114 koaxial zur Verbindungsklappachse 90 angeordnet ist und auch die Öse 116 koaxial zur Verbindungsklappachse 90 steht, was nur dann erreichbar ist, wenn die Windschotteile 50 und 52 sowie die Abdeckungsteile 60 und 62 jeweils soweit um die entsprechenden Klappachsen 44 und 64 geklappt sind, daß diese in ihrer ausgebreiteten Stellung stehen und beispielsweise das Windschott 12 und die Abdeckung 16 aufeinander liegen oder zumindest der untere Rahmenträger 32 parallel zum vorderen Rahmenträger 72 verläuft.

Vorzugsweise weist auch die Fixiereinrichtung 22 einen Verriegelungsbolzen 118 auf, der ebenfalls in eine entsprechende Ausnehmung der Karosserie 10 eingreifen kann, um die Windstopeinrichtung an dieser zu fixieren.

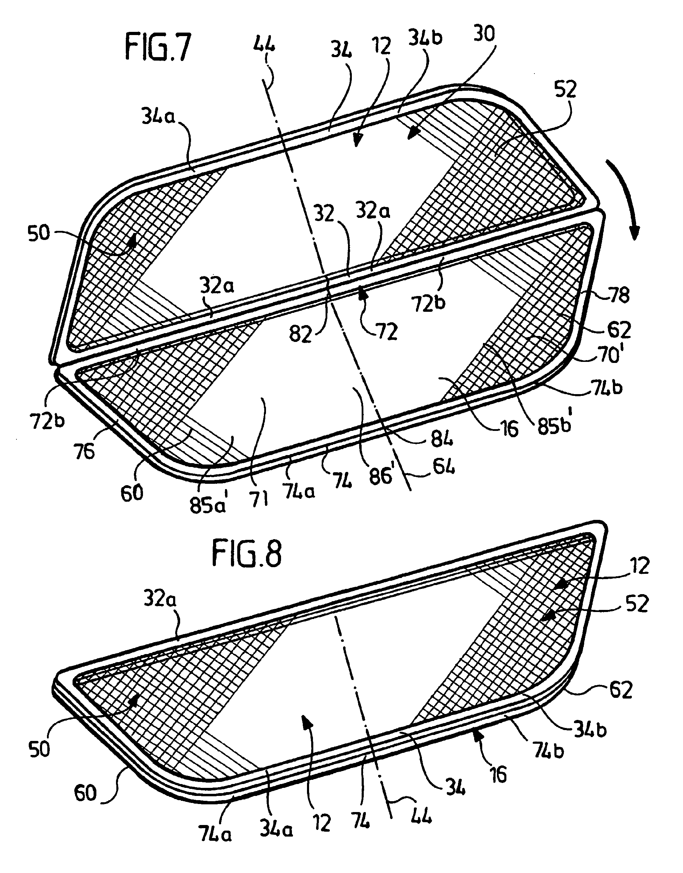

Bei einem zweiten Ausführungsbeispiel einer erfindungsgemäßen Windstopeinrichtung, dargestellt in den Fig. 7 bis 10, sind diejenigen Teile, die mit denen des ersten Ausführungsbeispiels identisch sind, mit denselben Bezugszeichen versehen, so daß hinsichtlich der Beschreibung derselben vollinhaltlich auf die Ausführungen zum ersten Ausführungsbeispiel Bezug genommen wird.

Im Gegensatz zum ersten Ausführungsbeispiel weist die Abdeckung 16 einen Abdeckungsrahmen 70' auf, welcher lediglich aus dem vorderen Rahmenträger 72, dem hinteren Rahmenträger 74 und den äußeren Verbindungsträgern 76 und 78 gebildet ist und somit ähnlich aufgebaut ist wie der Windschottrahmen 30. Aus diesem Grund sind der vordere Rahmenträger 72 und der hintere Rahmenträger 74 mit den äußeren Verbindungsträger 76 und 78 versehen, so daß der Abdeckungsrahmen 70' eine einheitliche Rahmenöffnung 86' aufweist, in welcher die Flachmaterialbahn 88 aufgespannt gehalten ist.

Der Abdeckungsrahmen 70' umfaßt somit ebenfalls zwei C-förmige Teilrahmen 85a', 85b' die sich mit ihren offenen Seiten an die Abdeckungsklappachse 64 anschließen.

Zum Vereinfachen des Klappens um die Klappachse 64 liegt die Flachmaterialbahn 88 in jedem Teilrahmen 85a, 85b in einer Fläche, vorzugsweise einer Ebene E_{U}, die mit den Unterseiten 100 und 102 der Abdeckungsteile 60, 62 zusammenfällt und die Abdeckungsklappachse 64 liegt in einer Schnittlinie dieser Flächen Eu.

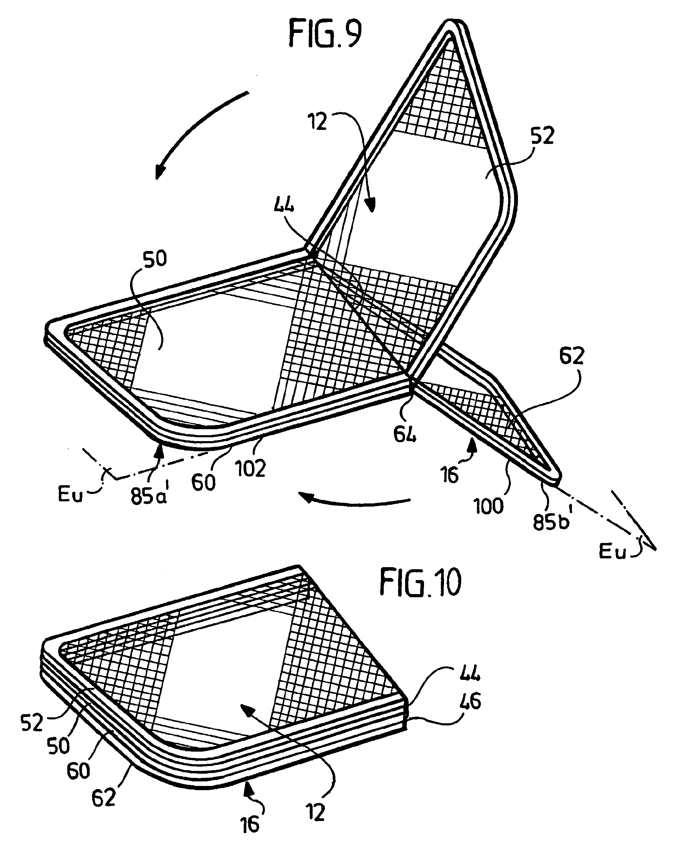

Im übrigen umfaßt sowohl das Windschott 12 zwei Windschotteile 50 und 52 und die Abdeckung 16 zwei Abdeckungsteile 60 und 62, die, wie in den Fig. 8 bis 10 dargestellt, in gleicher Weise und um dieselben Achsen zueinander klappbar sind, wie im Zusammenhang mit dem ersten Ausführungsbeispiel im Detail beschrieben.

Bei dem zweiten Ausführungsbeispiel sind insbesondere der Windschottrahmen 30 und der Abdeckungsrahmen 70 vom Prinzip her identisch aufgebaut, so daß sich im in Fig. 10 dargestellten zusammengeklappten Zustand vorzugsweise ein einheitliches Bild ergibt.

## Patentansprüche

1. Windstopeinrichtung, insbesondere für Cabriofahrzeuge, umfassend ein Windschott (12), welches aus zwei Windschotteilen (50, 52) gebildet ist, die ihrerseits um eine Windschottklappachse (44) von einer ausgebreiteten Stellung, in welcher sich das Windschott (12) mit maximaler Ausdehnung in einer Ausbreitungsrichtung (91) erstreckt, in eine zusammengeklappte Stellung bringbar ist, in welcher die beiden Windschotteile (50, 52) im wesentlichen aufeinander liegen, und weiter umfassend eine mit dem Windschott (12) verbundene Abdeckung (16) für einen Teilbereich (18) einer Fahrgastraumöffnung einer Karosserie (10), welche durch zwei Abdeckungsteile (60, 62) gebildet ist,
**dadurch gekennzeichnet, daß** die Abdeckungsteile (60, 62) um eine Abdeckungsklappachse (64) schwenkbar aneinander gelagert sind und von einer ausgebreiteten Stellung, in welcher sich die Abdeckung (16) mit maximaler Erstreckung in der Ausbreitungsrichtung (91) erstreckt, in eine zusammengeklappte Stellung bringbar sind, in welcher die beiden Abdeckungsteile (60, 62) im wesentlichen aufeinander liegen, so daß sich im völlig zusammengeklappten Zustand der Windstopeinrichtung ein Stapel bilden läßt, bei welchem zwei Abdeckungsteile (60, 62) aufeinander liegen und auf diesem die zwei aufeinander liegenden Windschottteile (50, 52) liegen, und daß in einer Funktionsstellung das Windschott (12) und die Abdeckung (16) zumindest durch eine Verbindung (104) von einem der Windschotteile (50) mit dem an dieses angrenzenden einen der Abdeckteile (60) miteinander verbunden sind.

2. Windstopeinrichtung nach Anspruch 1, **dadurch gekennzeichnet, daß** die Verbindung (104) so ausgebildet ist, daß das eine der Windschotteile (50) und das eine der Abdeckungsteile (60) von der Funktionsstellung, in welcher diese quer zueinander verlaufen, in eine zusammengeklappte Stellung, in welcher diese im wesentlichen aufeinander liegen, bewegbar sind.

3. Windstopeinrichtung nach Anspruch 2, **dadurch gekennzeichnet, daß** die Verbindung eine um eine Verbindungsklappachse (90) schwenkbare Verbindung (104) ist.

4. Windstopeinrichtung nach Anspruch 2 oder 3, **dadurch gekennzeichnet, daß** das andere der Windschotteile (52) und das andere der Abdeckungsteile (62) in der Funktionsstellung lösbar miteinander verbindbar sind.

5. Windstopeinrichtung nach Anspruch 4, **dadurch gekennzeichnet, daß** das andere der Windschotteile (52) und das andere der Abdeckungsteile (62) durch eine bewegliche Verbindung (110) miteinander lösbar verbindbar sind.

6. Windstopeinrichtung nach Anspruch 5, **dadurch gekennzeichnet, daß** das andere der Windschotteile (52) und das andere der Abdeckungsteile (62) in der jeweils ausgebreiteten Stellung um eine zur Verbindungsklappachse (90) koaxiale Achse schwenkbar miteinander verbindbar sind.

7. Windstopeinrichtung nach einem der voranstehenden Ansprüche, **dadurch gekennzeichnet, daß** das Windschott (12) einen Windschottrahmen (30) umfaßt, welcher eine Flachmaterialbahn (42) hält.

8. Windstopeinrichtung nach Anspruch 7, **dadurch gekennzeichnet, daß** der Windschottrahmen (30) die Flachmaterialbahn (42) aufgespannt hält.

9. Windstopeinrichtung nach Anspruch 7 oder 8, **dadurch gekennzeichnet, daß** die Windschottklappachse (44) nahe einer Fläche (E_{F}) liegt, in welcher sich die Flachmaterialbahn (42) erstreckt.

10. Windstopeinrichtung nach einem der Ansprüche 7 bis 9, **dadurch gekennzeichnet, daß** der Windschottrahmen (30) durch einen unteren Rahmenträger (32) und einen oberen Rahmenträger (34) sowie diese verbindende Verbindungsträger (36, 38) gebildet ist.

11. Windstopeinrichtung nach Anspruch 10, **dadurch gekennzeichnet, daß** der untere Rahmenträger (32) und der obere Rahmenträger (34) zwei jeweils durch ein Scharnier (54, 56) verbundene Rahmenträgerteile (32a, b; 34a, b) aufweisen.

12. Windstopeinrichtung nach Anspruch 11, **dadurch gekennzeichnet, daß** der Windschottrahmen (30) aus zwei C-förmigen Teilrahmen (58a, 58b) gebildet ist, die sich mit ihren offenen Seiten an die Windschottklappachse (44) anschließen.

13. Windstopeinrichtung nach einem der voranstehenden Ansprüche, **dadurch gekennzeichnet, daß** die Abdeckung (16) einen Abdeckungsrahmen (70) umfaßt, welcher eine Flachmaterialbahn (86) hält.

14. Windstopeinrichtung nach Anspruch 13, **dadurch gekennzeichnet, daß** die Flachmaterialbahn (86) vom Abdeckungsrahmen (70) aufgespannt gehalten ist.

15. Windstopeinrichtung nach Anspruch 13 oder 14, **dadurch gekennzeichnet, daß** die Abdeckungsklappachse (64) nahe einer Fläche (E_{U}) liegt, in welcher sich die Flachmaterialbahn (86) erstreckt.

16. Windstopeinrichtung nach einem der Ansprüche 13 bis 15, **dadurch gekennzeichnet, daß** der Abdeckungsrahmen (70) zwei quer zur Abdeckungsklappachse (64) verlaufende Rahmenträger (72, 74) aufweist.

17. Windstopeinrichtung nach Anspruch 16, **dadurch gekennzeichnet, daß** einer der Rahmenträger ein vorderer Rahmenträger (72) und der andere ein hinterer Rahmenträger (74) ist.

18. Windstopeinrichtung nach einem der Ansprüche 13 bis 17, **dadurch gekennzeichnet, daß** der Abdeckungsrahmen (70) eine zusammenhängende Rahmenöffnung (86') umschließt.

19. Windstopeinrichtung nach einem der Ansprüche 13 bis 18, **dadurch gekennzeichnet, daß** der Abdeckrahmen (70) zwei C-förmige Rahmenteile (85a', 85b') aufweist, die mit ihren offenen Seiten an der Abdeckungsklappachse (64) aneinander anschließen.

20. Windstopeinrichtung nach einem der Ansprüche 13 bis 18, **dadurch gekennzeichnet, daß** der Abdeckungsrahmen (70) aus zwei umlaufend geschlossenen Rahmenteilen (85a, 85b) gebildet ist.

21. Windstopeinrichtung nach einem der voranstehenden Ansprüche, **dadurch gekennzeichnet, daß** die lösbare Verbindung (110) des anderen der Windschotteile (52) und des anderen der Abdeckungsteile (62) gleichzeitig eine Fixiereinrichtung (24) zur Fixierung der erfindungsgemäßen Windstopeinrichtung an der Karosserie (10) des Cabriofahrzeugs darstellt.

## Claims

1. Wind stop device, in particular, for convertible vehicles, comprising a wind blocker (12) formed from two wind blocker parts (50, 52) adapted, for their part, to be brought about a wind blocker folding axis (44) from an extended position where the wind blocker (12) extends with a maximum extension in a direction of extension (91) into a folded position where the two wind blocker parts (50, 52) are essentially located on top of one another, and further comprising a cover (16) for a section (18) of a passenger compartment opening of a vehicle body (10), said cover being connected to the wind blocker (12) and being formed by two cover parts (60, 62), **characterized in that** the cover parts (60, 62) are mounted on one another so as to be pivotable about a cover folding axis (64) and are adapted to be brought from an extended position where the cover (16) extends with a maximum extension in the direction of extension (91) into a folded position where the two cover parts (60, 62) are essentially located on top of one another such that a stack is adapted to be formed in the state of the wind stop device completely folded together, two cover parts (60, 62) being located on top of one another in said stack and the two wind stop parts (50, 52) located on top of one another being located thereon, and that in a functional position the wind blocker (12) and the cover (16) are connected to one another at least by a connection (104) of one of the wind blocker parts (50) to the one of the cover parts (60) bordering on it.

2. Wind stop device as defined in claim 1, **characterized in that** the connection (104) is designed such that the one of the wind blocker parts (50) and the one of the cover parts (60) are movable from the functional position where they extend transversely to one another into a folded position where they are essentially located on top of one another.

3. Wind stop device as defined in claim 2, **characterized in that** the connection is a connection (104) pivotable about a connection folding axis (90).

4. Wind stop device as defined in claim 2 or 3, **characterized in that** the other one of the wind blocker parts (52) and the other one of the cover parts (62) are releasably connectable to one another in the functional position.

5. Wind stop device as defined in claim 4, **characterized in that** the other one of the wind blocker parts (52) and the other one of the cover parts (62) are releasably connectable to one another by means of a movable connection (100).

6. Wind stop device as defined in claim 5, **characterized in that** the other one of the wind blocker parts (52) and the other one of the cover parts (62) are connectable to one another in the respectively extended position so as to be pivotable about an axis coaxial to the connection folding axis (90).

7. Wind stop device as defined in any one of the preceding claims, **characterized in that** the wind blocker (12) comprises a wind blocker frame (30) holding a web of flat material (42).

8. Wind stop device as defined in claim 7, **characterized in that** the wind blocker frame (30) holds the web of flat material (42) in a tensioned manner.

9. Wind stop device as defined in claim 7 or 8, **characterized in that** the wind blocker folding axis (44) is located close to a surface area (E_{F}), the web of flat material (42) extending in said surface area.

10. Wind stop device as defined in any one of claims 7 to 9, **characterized in that** the wind blocker frame (30) is formed by a lower frame support (32) and an upper frame support (34) as well as connecting supports (36, 38) connecting them.

11. Wind stop device as defined in claim 10, **characterized in that** the lower frame support (32) and the upper frame support (34) have two frame support parts (32a, b; 34a, b) connected by a respective hinge (54, 56).

12. Wind stop device as defined in claim 11, **characterized in that** the wind blocker frame (30) is formed from two C-shaped frame sections (58a, 58b) adjoining the wind blocker folding axis (44) with their open sides.

13. Wind stop device as defined in any one of the preceding claims, **characterized in that** the cover (16) comprises a cover frame (70) holding a web of flat material (86).

14. Wind stop device as defined in claim 13, **characterized in that** the web of flat material (86) is held by the cover frame (70) in a tensioned manner.

15. Wind stop device as defined in claim 13 or 14, **characterized in that** the cover folding axis (64) is located close to a surface area (E_{U}), the web of flat material (86) extending in said surface area.

16. Wind stop device as defined in any one of claims 13 to 15, **characterized in that** the cover frame (70) has two frame supports (72, 74) extending transversely to the cover folding axis (64).

17. Wind stop device as defined in claim 16, **characterized in that** one of the frame supports is a front frame support (72) and the other a rear frame support (74).

18. Wind stop device as defined in any one of claims 13 to 17, **characterized in that** the cover frame (70) surrounds a continuous frame opening (86').

19. Wind stop device as defined in any one of claims 13 to 18, **characterized in that** the cover frame (70) has two C-shaped frame parts (85a', 85b') adjoining one another with their open sides at the cover folding axis (64).

20. Wind stop device as defined in any one of claims 13 to 18, **characterized in that** the cover frame (70) is formed from two frame parts (85a, 85b) closed around their circumference.

21. Wind stop device as defined in any one of the preceding claims, **characterized in that** the releasable connection (110) of the other one of the wind blocker parts (52) and the other one of the cover parts (62) represents at the same time a fixing device (24) for fixing the wind stop device according to the invention to the body (10) of the convertible vehicle.

## Revendications

1. Dispositif pare-vent, en particulier pour des véhicules de type cabriolet, comprenant une cloison pare-vent (12), formée de deux parties de cloison pare-vent (50, 52) qui, de leurs côtés, autour d'un axe de rabattement de cloison pare-vent (44), sont susceptibles d'être placées d'une position déployée, à laquelle la cloison pare-vent (12) s'étend avec une étendue maximale en une direction de déploiement (91), en une position repliée à laquelle les deux parties de cloison pare-vent (50, 52) sont situées sensiblement l'une sur l'autre, et comprenant en outre un recouvrement (16) relié à la cloison pare-vent (12), pour une zone partielle (18) d'une ouverture d'habitacle d'une carrosserie (10), recouvrement formé par deux parties de recouvrement (60, 62), **caractérisé en ce que** les parties de recouvrement (60, 62) sont montées de façon à pivoter l'une sur l'autre autour d'un axe de rabattement de recouvrement (64) et sont susceptibles de passer, d'une position déployée, à laquelle le recouvrement (16) s'étend avec une étendue maximale dans la direction de déploiement (91), en une position repliée, à laquelle les deux parties de recouvrement (60, 62) sont situées sensiblement l'une sur l'autre, de manière que, à l'état complètement replié du dispositif pare-vent, puisse être formée une pile, pour laquelle deux parties de recouvrement (60, 62) sont situées l'une sur l'autre et sur laquelle se trouvent les deux parties de cloison pare-vent (50, 52) situées l'une sur l'autre, et **en ce que**, en une position fonctionnelle, la cloison pare-vent (12) et le recouvrement (16) sont reliés ensemble, au moins par une liaison (104), d'une des parties de cloison pare-vent (50) à celle limitrophe à celle-ci, des parties de recouvrement (60).

2. Dispositif pare-vent selon la revendication 1, **caractérisé en ce que** la liaison (104) est réalisée de manière qu'une des parties de cloison pare-vent (50) et l'une des parties de recouvrement (60) soient déplaçables, de la position fonctionnelle, à laquelle celles-ci s'étendent transversalement l'une par rapport à l'autre, à une position repliée, à laquelle celles-ci sont situées sensiblement l'une sur l'autre.

3. Dispositif pare-vent selon la revendication 2, **caractérisé en ce que** la liaison (104) est une liaison (104) permettant un pivotement autour d'un axe de liaison avec rabattement (90).

4. Dispositif pare-vent selon la revendication 2 ou 3, **caractérisé en ce que** l'autre des parties de cloison pare-vent (52) et l'autre des parties de recouvrement (62) sont susceptibles d'être reliées ensemble de façon séparable à la position fonctionnelle.

5. Dispositif pare-vent selon la revendication 4, **caractérisé en ce que** l'autre des parties de cloison pare-vent (52) et l'autre des parties de recouvrement (62) sont susceptibles d'être reliées ensemble par une liaison séparable (110) mobile.

6. Dispositif pare-vent selon la revendication 5, **caractérisé en ce que** l'autre des parties de cloison pare-vent (52) et l'autre des parties de recouvrement (62), chaque fois à la position déployée, sont susceptibles d'être reliées ensemble à pivotement, autour d'un axe coaxial à l'axe de la liaison à rabattement (90).

7. Dispositif pare-vent selon l'une des revendications précédentes, **caractérisé en ce que** la cloison pare-vent (12) comprend un cadre de cloison pare-vent (30), maintenant une bande de matériau plat (42).

8. Dispositif pare-vent selon la revendication 7, **caractérisé en ce que** le cadre de cloison pare-vent (30) maintient tendue la bande de matériau plat (42).

9. Dispositif pare-vent selon la revendication 7 ou 8, **caractérisé en ce que** l'axe de rabattement de la cloison pare-vent (44) est situé à proximité d'une surface (E_{F}), dans laquelle s'étend la bande de matériau plat (42).

10. Dispositif pare-vent selon l'une des revendications 7 à 8, **caractérisé en ce que** le cadre de cloison pare-vent (30) est formé par un support de cadre inférieur (32) et un support de cadre supérieur (34), ainsi que par des supports de liaison (36, 38) reliant ceux-ci.

11. Dispositif pare-vent selon la revendication 10, **caractérisé en ce que** le support de cadre inférieur (32) et le support de cadre supérieur (34) présentent deux parties de support de cadre (32a, b ; 34a, b) reliées chacune par une charnière (54, 56).

12. Dispositif pare-vent selon la revendication 11, **caractérisé en ce que** le cadre de cloison pare-vent (30) est formé de deux cadres partiels (58a, 58b) en forme de C, se raccordant, par leurs côtés ouverts, à l'axe de rabattement de la cloison pare-vent (44).

13. Dispositif pare-vent selon l'une des revendications précédentes, **caractérisé en ce que** le recouvrement (16) comprend un cadre de recouvrement (70) maintenant une bande de matériau plat (86).

14. Dispositif pare-vent selon la revendication 13, **caractérisé en ce que** la bande de matériau plat (86) est maintenue tendue par le cadre de recouvrement (70).

15. Dispositif pare-vent selon la revendication 13 ou 14, **caractérisé en ce que** l'axe de rabattement de recouvrement (64) est situé près d'une surface (E_{U}) dans laquelle s'étend la bande de matériau plat (86).

16. Dispositif pare-vent selon l'une des revendications 13 à 15, **caractérisé en ce que** le cadre de recouvrement (70) présente deux supports de cadre (72, 74) s'étendant transversalement par rapport à l'axe de rabattement de recouvrement (64).

17. Dispositif pare-vent selon la revendication 16, **caractérisé en ce que** l'un des supports de cadre est un support de cadre avant (72) et l'autre est un support de cadre arrière (74).

18. Dispositif pare-vent selon l'une des revendications 13 à 17, **caractérisé en ce que** le cadre de recouvrement (70) entoure une ouverture de cadre (86') continue.

19. Dispositif pare-vent selon l'une des revendications 13 à 18, **caractérisé en ce que** le cadre de recouvrement (70) présente deux parties de cadre (85a' , 85b') en forme de C, qui se raccordent l'une à l'autre, par leurs côtés ouverts, à l'axe de rabattement de recouvrement (64).

20. Dispositif pare-vent selon l'une des revendications 13 à 18, **caractérisé en ce que** le cadre de recouvrement (70) est formé par deux parties de cadre (85a, 85b) fermées en pourtour.

21. Dispositif pare-vent selon l'une des revendications précédentes, **caractérisé en ce que** la liaison (110) séparable de l'autre des parties de cloison pare-vent (52) et l'autre des parties de recouvrement (62) constitue simulta-nément un dispositif de fixation (24), pour fixer le dispositif pare-vent selon l'invention sur la carrosserie (10) du véhicule de type cabriolet.
